# EUROPEAN PATENT SPECIFICATION

(11) **EP 2 280 514 B1**
(45) Date of publication and mention of the grant of the patent: **12.11.2014**
(21) Application number: 09009925.0
(22) Date of filing: 31.07.2009
(51) Int. Cl.: H04L 29/12, H04L 12/701, H04L 12/709

(54) **Data stream bundling via public packet-switched networks**
Datenstrombündelung über öffentliche paketgeschaltete Netzwerke
Groupage de flux de données par des réseaux commutés par paquets publiques

(43) Date of publication of application: 02.02.2011
(73) Proprietor: CureFab Technologies GmbH, 80637 München (DE)
(72) Inventor: Hohenester, Michael, 80992 München (DE); Wittmeier, Sebastian, 80992 München (DE)
(74) Representative: Eisenführ Speiser

(56) References cited:
- EP-A- 1 094 646
- CONANT G E: "MULTILINK PPP: ONE BIG VIRTUAL WAN PIPE" DATA COMMUNICATIONS, MCGRAW HILL. NEW YORK, US, vol. 24, no. 13, 21 September 1995 (1995-09-21), pages 85-88,90, XP000526197 ISSN: 0363-6399

## Description

### FIELD OF THE INVENTION

The present invention relates to an apparatus, system, method and computer program product for bundling a data stream to be transmitted via a public packet-switched network.

### BACKGROUND OF THE INVENTION

The need for high-speed Internet connections with sufficient bandwidth capacity for both upstream and downstream is steadily growing. However, commonly available Internet connection technologies are either rather expensive (e.g. symmetric lines such as Symmetric Digital Subscriber Line (SDSL)) or have a limited upstream bandwidth (e.g. asymmetric lines such as Asymmetric Digital Subscriber Line (ADSL) or Very High Speed Digital Subscriber Line (VDSL)).

Therefore, it has been proposed to bundle several inexpensive lines to arrive at a virtual fast connection. A simple bundling approach is to distribute Internet traffic on available channels such as for example round-robin load-balancing. This can be done on a perconnection basis so as to maintain open connections to other hosts. However, this approach has two disadvantages. First, the public Internet Protocol (IP) address of the user changes each time the channel is switched. Many Internet sites, especially those that need the user to log in like home banking, webmail, e-commerce etc. store a current IP address of the user and log him or her out automatically when the address changes. The second disadvantage applies to all Internet applications, which keep one connection open for an expanded time period. This connection is not accelerated in itself. The load-balancing method only works if a multitude of these connections are open at the same time. Hence, non-fragmented transfer of large data files or transmission of high definition video conferences cannot profit from such a bundling approach. There is a trade-off between acceleration and compatibility problems, which makes the above round-robin load-balancing approach a suboptimal compromise.

More advanced techniques are available, such as Multilink-Point-to-Point Protocol (Multilink-PPP) and/or multipath routing for bundling asymmetric lines. Multilink-PPP bundles on the link layer (level 2 of the Open Systems Interconnection (OSI) reference model), while multipath routing bundles on the network layer (level 3 of the OSI reference model). Both techniques need special provisions in the infrastructure of the provider, so that they are not broadly available in public networks. They also share some disadvantages with SDSL. One is reduced reliability, since one can only use one provider and Internet access technology at one time and a connection is interrupted if the related provider has a break-down. Another disadvantage is the necessary additional infrastructure to be placed at the provider.

Additionally PHY (or Physical) Layer bonding has been proposed, which involves grouping raw physical transport data rates of a number of DSL lines together such that a single higher bandwidth connection is provided. PHY Layer bonding has the advantage of protocol transparency. However, it is relatively inflexible in terms of how individual lines may be grouped. SHDSL is the only DSL technology that provides PHY Layer bonding as a standardized function. SHDSL currently limits bonding to a maximum of 2-pairs but there is ongoing standards activity to increase this beyond the 2-pair limit.

Furthermore, Inverse Multiplexing for Asynchronous Transfer Mode (IMA) has been proposed, which adds an intermediate protocol layer between the PHY and ATM layers, that is implemented at a customer located equipment (CLE) and within the service provider's access node. Using this intermediate protocol layer, IMA may group up to 32 individual DSL lines together to form a single, aggregated ATM transport link. Although IMA introduces some small operational overhead, the IMA sublayer is transparent to the ATM layer above the transmission convergence sublayer, and to other higher protocol layers.

However, PHY Layer bonding cannot be used for ADSL and IMA requires specific preparations by the provider.

In view of this, there is a need for a provider-independent technology that may for example be used to bundle common ADSL and VDSL connections even within a single connection. This could be achieved for example based on a virtual private network (VPN) technology. However, the VPN technology is disadvantageous in that with VPN solutions all traffic is routed to and from a data center which handles encryption and data transfer. With the bundling of asymmetric connections like ADSL or VDSL with VPN technology, typically over 90% of the overall amount of traffic in the data center is caused by the downstream link from the network towards the terminal(s), although a primary desire is to bundle in the upstream direction. A further disadvantage of VPN technology is a rather high latency due to twice rerouting of packets.

The DE 10 2007 012 143 A1 discloses a data stream conveying arrangement for establishing a VPN connection between a client and its host to provide data transmission via several communication channels. To achieve this, a receiver auxiliary device is introduced for receiving and decapsulating encapsulated data packets and for conducting decapsulated packets in sequence of the data stream to a receiving device. Thereby, an arbitrary number of network access lines with different characteristics can be bundled and the risk of break-down of the whole access can be reduced and total access bandwidth can be arbitrarily scaled.

Furthermore, the US 2002/0010866 A1 discloses a method and apparatus for improving peer-to-peer bandwidth between remote networks by combining multiple connections which use arbitrary data parts. More specifically, a VPN is established between two edges of a public computer network so as to connect each of these edges to a private network to permit communication between private networks. To achieve this, gateway nodes are used at both connection ends to provide facilities to treat multiple tunnels between an initiator and a responder as a unified channel.

### SUMMARY

It is an object of the present invention to provide a new resource-saving bundling approach, by means of which commonly available communication lines can be bundled within a single connection.

This object is achieved by an apparatus as claimed in claim 1, a system as claimed in claim 14, a method as claimed in claim 17, and a computer program product as claimed in claim 18.

Accordingly, primary and secondary data channels can be established based on commonly available communication lines (such as ADSL, VDSL or the like), so that the proposed bundling approach is widely available and does not have to be supported by specific providers. Additionally, connections of different providers can be combined to thereby reduce the risk of breakdowns. If only the at least one secondary channel is used for bundling, the primary data channel can still be used for directly receiving response packets from the destination(s).

Due to the fact that the at least one second packet stream can be directly answered without channel bundling by using the single address as destination address, an asymmetric bundling approach can be achieved, wherein only one transmission direction (e.g. upload direction) can be bundled, while the other direction (e.g. download) can be routed through a single channel. This single channel may be an asymmetric base connection with a high download bandwidth.

The base channels used in the proposed bundling approach can be based on common mass technologies, and server traffic to be routed can be kept low, network modifications can be minimized (contrary to SDSL, Multilink-PPP, PHY layer bonding, IMA, multipath routing or VPN solutions). Compared to VPN solutions, additional latency can be kept low by using asymmetric bundling and keeping system overhead low.

The fact that the proposed bundling approach allows to use a single address as a constant IP address towards the public, bundling can be easily harmonized with a server operation.

As the bundling is achieved on IP level (it is possible to use IPv4 and/or IPv6) and is kept fully transparent for the receiving end, the proposed bundling approach is very compatible and bridging can be used to allocate the public address to a local network device or terminal device.

The packet addressing means may comprise a network address translator for translating between at least one local address of a non-public network and the single address (e.g. in one or both directions). This provides the advantage that one or several terminals (e.g. computers or routers of a private network, such as a local area network (LAN)) can be used as data source.

Furthermore, the packet addressing means may comprise bridging means for forwarding response packets, which are destined to the single address, to at least one local data source and thereby extending the public-switched network to the local data source. In this case, a connection to the public packet-switched network (e.g. PPP connection) from a provider can be extended on OSI level 2. According to a more specific example, address allocating means may be provided for allocating the single address to the at least one local data source. Thereby, an automatic address allocation (such as the Dynamic Host Configuration Protocol (DHCP)) can be used to allocate an address to a local data source.

According to a specific aspect, packets of the second packet stream may be transferred with routing information (provided e.g. in the packet header or in the packet meta data) leading to the auxiliary server by routing. This can be used as an alternative way for the proposed bundling, where the packet format of the public network and involved downstream devices support designating a specific route for a packet (e.g. the IPv6 Routing Extension as described e.g. in Request for Comments (RFC) 3460 and RFC 3775). Thus, the present invention is to be understood in a sense that "encapsulation" covers any approach where the address of the final destination is incorporated as a subsequent destination address in the data packets of the at least one second packet stream. This may be achieved e.g. by encapsulating the whole packets (e.g. tunneling) or by adding an information indicating the auxiliary server address to the header or payload portion of packets while their destination address points to the final destination.

The provision of the single source address may be achieved by encapsulating it in the packets of the at least one second packet stream or by transmitting it to the auxiliary server when initiating the connection to the auxiliary server, or by transmitting it to or retrieving it at the destination (e.g. a target server may retrieve the single source address from the auxiliary server based on the address of the auxiliary server or from a subscriber database based on a subscriber information).

According to another aspect, the packet switching means may be adapted to branch all transmission data packets of the data stream to the at least one second packet stream. In this case, the primary data channel is at least primarily used for receiving data, while transmission of data is achieved via the secondary data channels.

According to another aspect, the packet switching means may be adapted to branch all connection-setup data packets and connection-release data packets to the first packet stream and to branch all other data packets to the at least one second packet stream. This provides the advantage that in case a packet filter is used by the provider to block invalid packets of connections which have not been established yet, it can be ensured that all packets received in the download direction are recognized as valid.

As a still further option, the apparatus may be configured to use the primary data channel also as a further secondary data channel. In this aspect, the primary data channel can be used to send non-capsulated and encapsulated data packets to achieve more flexibility and increase transmission bandwidth. Additionally, transmission delays and latencies of all bundled channels can be made at least substantially equal.

As an additional option, ciphering means may be provided for ciphering the encapsulated data packets. Thereby, the option of a VPN environment in the bundled transmission direction is available.

According to a further aspect, packet size control means may be provided for rejecting packets which exceed a predetermined size and which are to be transmitted via the primary data channel, and/or for dividing data packets to be transmitted via the at least one secondary data channel into fragments, so as to ensure a predetermined maximum packet size.

As a further option, fail-safe control means may be provided for controlling the packet switching means to forward data packets only to active ones of the primary and secondary data channels. Such a fail-safe control increases the reliability of the transmission.

As another option, load balancing means may be provided for selectively changing allocation of channels to the primary and secondary data channels so as to balance channel load caused by responses from the destinations. The load balancing means can be used for defining for each established connection or for each data source (e.g. LAN, a personal computer (PC)) a primary channel, while the other channels are used as secondary data channels. That is, the allocation of primary and secondary data channels can be seen as a logical allocation without any physical fixation. Each channel can be a primary data channel for some connections and a secondary data channel for other connections. In the asymmetric bundling approach, the auxiliary server is only used in the upload direction, while in each case download is achieved only via the primary data channel.

As an alternative, reverse bundling means may be provided for selectively bundling at least one data stream received from the destinations via a virtual private network or a proxy device and in the latter case using the address of the proxy device as single source address. Thereby, download traffic can be bundled via the VPN or the proxy for selected data transmissions. This may be achieved based on established parallel connections.

In addition, the apparatus may comprise at least one direct secondary data channel for directly transmitting non-encapsulated data packets of the second packet stream with the single address as source address to the destinations. This can be done by routing out prefabricated packets with the single source address or by source address spoofing. This direct secondary channel can be used in the system as a direct secondary data channel through which data packets are directly transmitted to the destination(s) without being encapsulated and without being redirected to the auxiliary server. The at least one second packet stream can also be directly answered without channel bundling by using the single address as destination address. Thereby, the proposed bundling can be used without encapsulation for those cases where no spoofing filter(s) is/are provided.

In the proposed bundling system, a common decapsulator provided at the auxiliary server may be assigned to the at least one encapsulator of the apparatus for all secondary data channels, so that data packets are forwarded in a correct sequential order to a respective destination. This is of particular advantage for applications where packets have to be received in a correct sequence, such as in real-time or multimedia (e.g. voice-over-IP (VoIP)) applications. The correct sequential order can be achieved at the common decapsulator e.g. based on a multi-channel tunneling protocol (such as L2TP) or, alternatively, the packets could be newly sorted in the auxiliary server.

As a further option, handshake simulation means may be provided for simulating synchronizing and acknowledging signals. Such a simulation of synchronizing and acknowledging signals can be used to accelerate connections and providing bundling of channels with large or substantially different latencies (e.g. ADSL together with Universal Mobile Telecommunications System (UMTS) connections). In a specific example, the handshake simulation means may be adapted to initiate retransmission of lost data packets.

The proposed system may be enhanced by providing at least one control server for assigning the secondary data channels to at least two auxiliary servers. Thereby, a flexible allocation of auxiliary servers to secondary channels can be achieved and load can be redistributed to another server. Moreover, auxiliary servers can be switched during a connection (e.g. when using the transmission control protocol (TCP)), and/or they can be operated anonymously such that no client-specific configuration is necessary for basic operation. This provides the advantage that load can be distributed in a very fast and very flexible manner and/or new clients can be established or released quickly.

Implementation of the proposed bundling approach can be based at least in part on a computer program comprising code means for producing the steps of method claim 20 when run on a computer device. The computer program may be stored on a computer-readable medium or may be downloadable from a private or public network.

The apparatus may be represented by a semiconductor chip, a chip set, or a (hardware) module comprising such chip or chip set. This, however, does not exclude the possibility that a functionality of an apparatus or module, instead of being hardware implemented, be implemented as software in a (software) module such as a computer program or a computer program product comprising executable software code portions for executing/being run on a processor.

Further advantageous modifications are defined in the dependent claims.

### BRIEF DESCRIPTION OF THE DRAWINGS

In the following, the present invention will be described in greater detail based on embodiments with reference to the accompanying drawings, in which:
Fig. 1 shows a schematic network environment according to a first embodiment;
Fig. 2 shows a schematic network environment according to a second embodiment;
Fig. 3 shows a schematic flow diagram of a bundling procedure according to a third embodiment;
Fig. 4 shows a schematic block diagram of a router device according to a fourth embodiment;
Fig. 5 shows a schematic block diagram of an auxiliary server device according to the fourth embodiment;
Fig. 6 shows a schematic block diagram of a router device according to a fifth embodiment;
Fig. 7 shows a schematic block diagram of a load balancer which can be used in the router device of the fifth embodiment;
Fig. 8 shows a schematic network architecture according to a sixth embodiment;
Fig. 9 shows a schematic network architecture according to a seventh embodiment;
Fig. 10 shows a schematic network architecture according to an eighth embodiment;
Fig. 11 shows a schematic block diagram of a bundling system, which clarifies the encapsulation and addressing process; and
Fig. 12 shows an exemplary LAN-based use case according to a ninth embodiment.

### DESCRIPTION OF EMBODIMENTS

Embodiments will now be described based on a communication system with packet-switched communication channels to achieve a generally compatible bundling system via a public packet-switched network, such as the Internet. The proposed bundling may be used for several asymmetric Internet connection comprising for example ADSL, VDSL, WLAN and cable connections in an upload direction.

Bundling is often used in connection with Integrated Services Digital Network (ISDN) connections, e.g. by using the fixed clock, the fixed transmission rate and the at least two channels. Therefore many ISDN communication protocols (e.g. EuroFile Transfer, European Telecommunications Standards Institute (ETSI) specification No. 300 075) directly support channel bundling. For that purpose they use a direct connection between the two stations. However, bundling of Internet (e.g. DSL) connections leads to a communication problem. Data traffic via the Internet is achieved by routing IP packets. They are transmitted in cases of requests and responses. Generally, a target server application (e.g. a web server or the like) which receives a request from a client, can only establish a connection and send an answer if all received IP packets contain the same source IP address. Consequently, no special requirements may be imposed on the other connection end (e.g. target server). Therefore, according to the embodiments, it is proposed to effectively bundle data channels (e.g. DSL channels) by transmitting IP packets to the target server, which all contain the same single source IP address. The proposed bundling scheme can thus be based on conventional DSL connections without any provider dependency, while bundling can be limited to upload traffic. This can be achieved by using one public address allocated to a user as download communication address and to transmit packets containing this source address via several connections.

To prevent possible misuse of Internet connections it is common practice that providers filter channels regarding the source address conveyed in the packet header. In case there are channels which are filtered (i.e. all channels except the specific channel having the single source address), the source address can be applied indirectly. This means that packets of these channels are encapsulated and tunneled to at least one auxiliary server, which is not filtered, where they are decapsulated and sent to the target server with the communication address as source address. Thus, the target server can no longer discriminate these packets from those packets directly transmitted via the primary channel with the communication address, so that the target server will send them back via the single primary channel with the communication address as destination address.

Accordingly, at least one forwarding node is used on at least one transmission direction to introduce packets into the network by tunneling or (address) spoofing, as if they were transmitted via a single communication channel of a data source. In this regard, the term spoofing refers to the creation of data packets with a forged (spoofed) source address with the purpose of concealing the identity of the sender or impersonating another computing system.

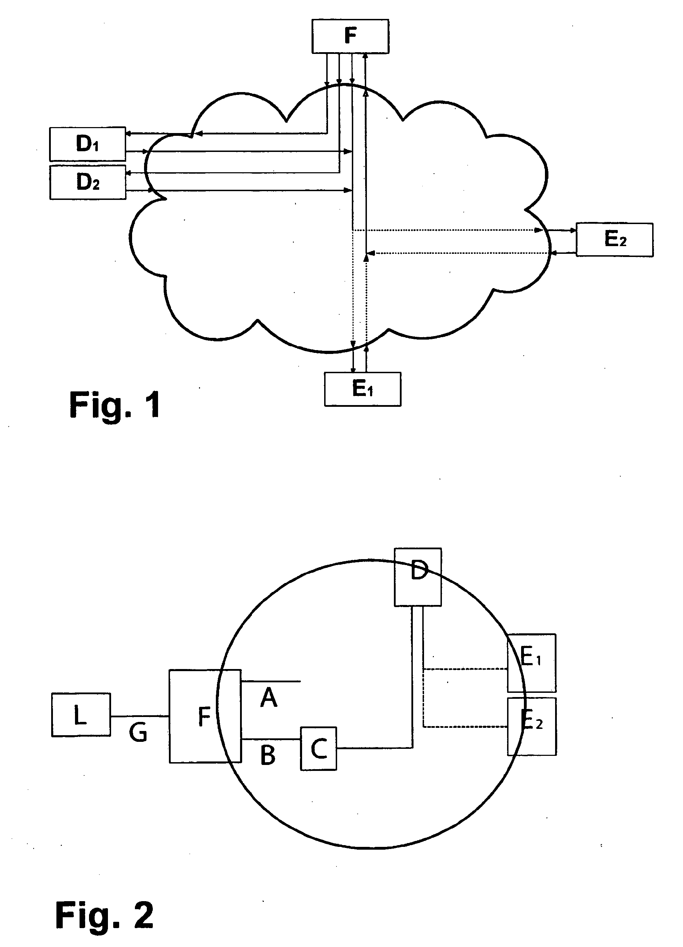

Fig. 1 shows a schematic network arrangement according to a first embodiment. In Fig. 1, the cloud symbolizes a public packet-switched network (e.g. an IP-based network such as the Internet) through which data packets are routed based on public addresses (e.g. IP addresses). As can be gathered from Fig. 1, a router F which may be part of the public network or which may provide an interface to the public network is used to split an upload data stream into three data channels of which two are routed via auxiliary servers D1 and D2 to destinations (e.g. target servers) E1 and E2, and of which one channel directly connects to the destinations E1 and E2.

Of course, any number of auxiliary servers and destinations may be used. As described above in connection with the basic principle underlying some embodiments, the response traffic (e.g. download traffic) can be routed directly via a single channel from the destinations E1 and E2 to the router F. Such an asymmetric bundling concept can be achieved by providing all data packets of the three upload channels with the same source address, so that the response packets use this single source address as a destination address to form a single response channel.

Fig. 2 shows a schematic network arrangement according to a second embodiment where such a packet filter C is provided in the public network. To prevent dropping of those packets which are not transmitted via a primary data channel A to which the source address is allocated, a tunneling approach can be used on split or branched-off secondary data channels B. Thus, an input data stream received via a local channel G from a local data source L (e.g. single local terminal or local computer or local network such as a Wireless Local Area Network (WLAN)) is split in a router F into first and second data streams, wherein data packets of the first data stream are routed with their allocated (correct) source address towards destinations E1 and E2. In contrast thereto, data packets of the secondary data channel B or a plurality of secondary data channels B are encapsulated in the router F to hide their source address. Thereby, these encapsulated data packets will not be dropped by the packet filter C and can be routed to an auxiliary server D, where they are decapsulated and forwarded to at least one of the destinations E1 and E2, from where they can be returned using their hidden source address as new destination address.

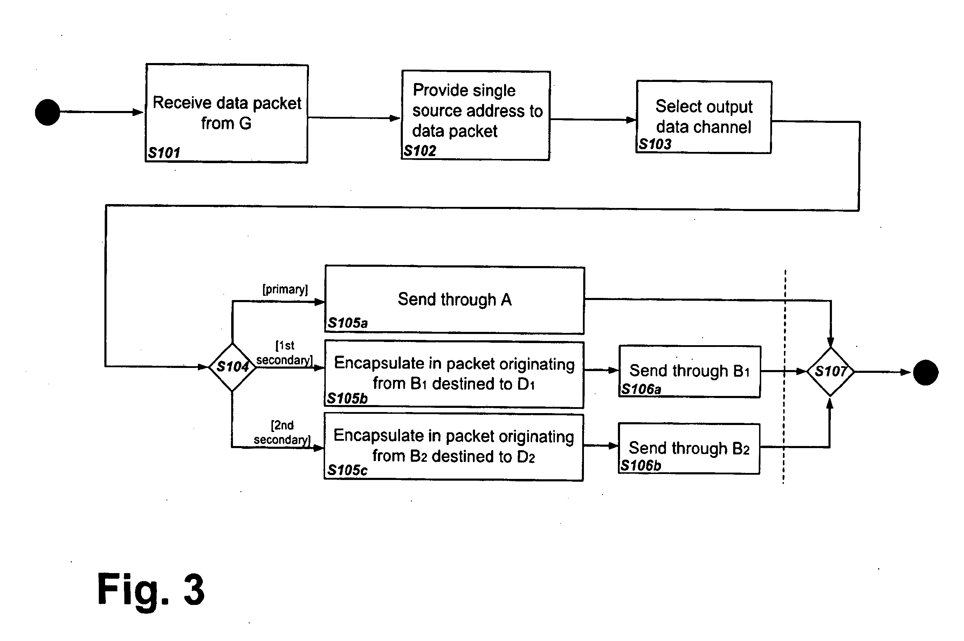

Fig. 3 shows a flow diagram of the processing underlying the proposed bundling approach according to a third embodiment, where the single source address is provided to all data packets of the first and second packet stream at the router F.

In a first step S101, data packets are received from the local channel G and then, in step S102, it is ensured that each data packet has the same single source address, which is an address of the public packet-switched network through which the received data packet is to be routed to a destination. Then, in step S 103 an output data channel is selected for each concerned data packet. According to the selection in step S103, the data packets are switched in step S104 to a primary data channel A without encapsulation or to a first or second secondary data channels B1, B2 with encapsulation. Data packets switched to the primary data channel A are sent in step 105a through the primary data channel A with their open single source address. Then, a combination processing is performed in step S107 where the data packets of the different channels are recombined. The recombination in step S107 may be performed at one or more physical locations in the public network and/or at the destination(s). Data packets switched to the first secondary data channel B1 are encapsulated in step S105b into a new packet originating from the first secondary data channel B1 with corresponding source address and destined to a first auxiliary server D1. In step S106a these packets are sent through the first secondary data channel B1 and are decapsulated and recombined in step S107. Those packets switched to the second secondary data channel B2 are encapsulated in step S105c in a new packet originating from the second secondary channel B2 and having a corresponding source address and are destined to a second auxiliary server D2. In step S106b these packets are sent through the second secondary data channel B2 before the decapsulation and combination processing is applied in step S107. After the combination processing in step S107 a single data stream is obtained again. As the decapsulated packets of the first and second secondary data channels B1 and B2 have the same single source address as the data packets of the primary data channel A, they can be sent back as a single data stream via the primary data channel A in the other transmission direction.

It is noted that the connection interface of the router F to which the single source address for download is allocated receives only a portion of the connection data. Therefore, a stateful network address translation (NAT) method which monitors OSI level 4 connections cannot be used at this late stage or point.

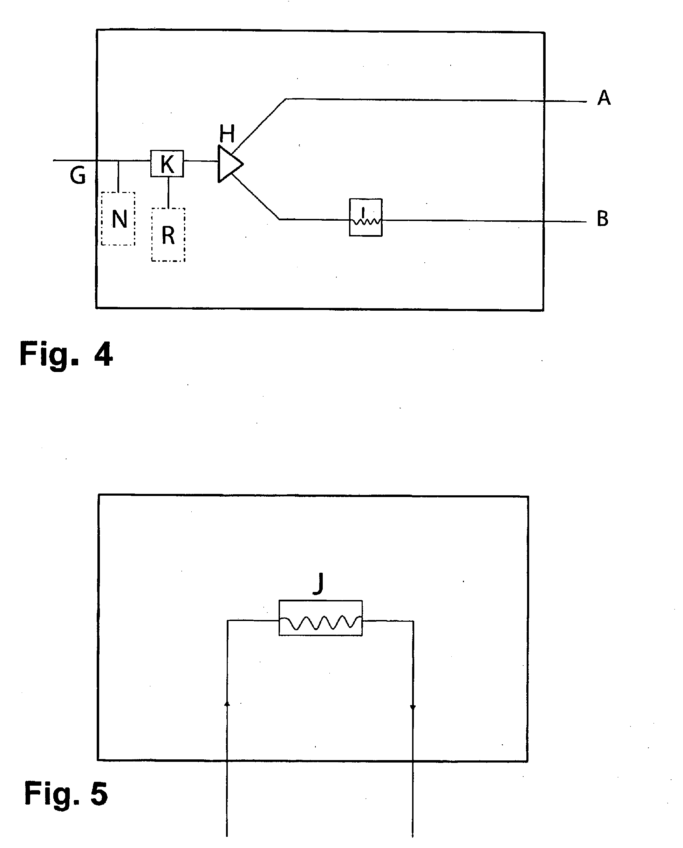

Fig. 4 shows a schematic block diagram of a router F according to a fourth embodiment which comprises a packet switching function or unit H as packet switching means and a subsequent packet addressing function or unit K as packet addressing means which may be configured to provide, among others, a NAT in order to maintain several connections. The packet switching unit H is configured to split or branch an input channel into a non-capsulated primary data channel A and an encapsulated secondary data channel B which comprises an encapsulator I in which data packets transmitted towards the public network are encapsulated to provide a tunneling mechanism and thereby hide the original source address which is the same as the one used in the primary data channel A.

The packet switching unit H may be adapted to divide the packets to the primary and to the secondary channel(s) e.g. according to e.g. a preset ratio or dynamically according to the current attainable channel throughput, usable e.g. for UMTS connections.

As the primary data channel A is used for transmission and reception, the packet addressing unit K provides an address allocation function (e.g. NAT) which fully operates on OSI level 3, so that each packet can be forwarded with translated source or destination address in the local network to which the router F is connected, regardless of any previous packets.

As an alternative, the packet addressing unit K may be arranged as a bridge on OSI level 2 which forwards response packets received from the public network and addressed to the primary data channel A to a local data source or data network connected via the local channel G by also using the same address of the primary data channel A. Optionally, an additional address allocation function or unity N (e.g. a Dynamic Host Configuration Protocol (DHCP) daemon or the like) may be provided, which allocates an address (e.g. the address of the primary data channel A) to the local data source. According to a modification, some or all of the secondary data channels B may be provided with route information (provided e.g. in the packet header or in the packet meta data) leading to the auxiliary server D by routing. In this case, encapsulation of the destination address at the encapsulator I is achieved by adding an information about the address of the auxiliary server D to the packet header or payload portion (e.g. meta data) and setting the destination address of the packet to the destination E1, E2..

Thus, the packet addressing unit K is configured to prepare data packets received as the data stream from the local channel G to be sent as an output stream, for preparing data packets received as an answer stream from the primary data channel A to be outputted on the local channel G to a local device reachable on the local channel G, and to provide at least one auxiliary server D with the single address of the primary data channel A as a subsequent source address.

According to another modification, the packet switching unit H may be arranged to branch all data packets to the secondary data channel B which might as well be more than one secondary data channel, so that the primary data channel A can be used exclusively for receiving data from the public network.

According to another modification, a connection tracker unit or function R may be provided (e.g. as a look-up table) which supports the packet switching unit H based on the packet addressing unit K to identify those packets used for connection establishment and connection release, so that the packet switching unit H can branch these identified packets to the primary data channel A, while the remaining packets are branched to the secondary data channel B. Hence, as all connections are established on the primary channel, connection filters that block packets from non-established connections will let pass all packets in the download direction.

As a further modification, the packet switching unit H may be configured to selectively use the primary data channel A also as a further secondary output data channel B. Thereby, similar latencies and delay times can be achieved in all bundled channels, so that packets arrive at their destination(s) substantially at the same time.

Fig. 5 shows a schematic block diagram of an auxiliary server D according to the fourth embodiment through which the secondary data channel(s) B can be routed and which comprises a decapsulator J which decapsulates the encapsulated data packets of the established tunnel connection to thereby remove the added headers, set the single source address as source address of the packet and set the destination address of the packet to the destination E1, E2.. Optionally, the decapsulator J may be a common decapsulator used for all secondary output channels B, so that packets can be sorted at the auxiliary server D and forwarded in the correct original sequential order to their destination.

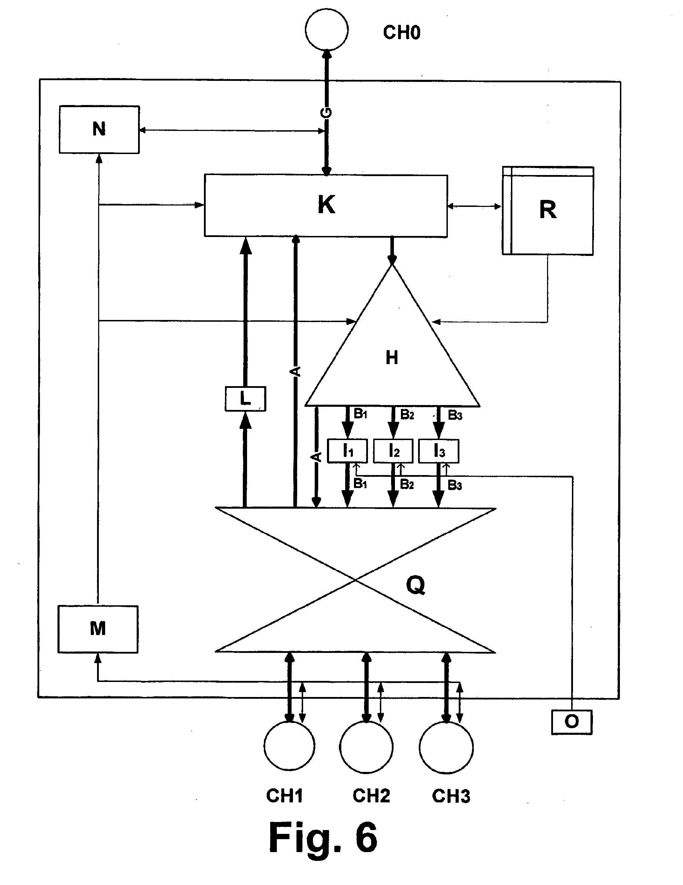

Fig. 6 shows a more detailed block diagram of an exemplary router F according to a fifth embodiment with a physical local data channel CH0 for connecting the router F to a local data source or data network, and with three physical data channels CH1 to CH3 for connecting the router to a public packet-switched network. Of course, any other number of physical data channels CH1 to CHn could be provided. An address allocation unit N, packet addressing unit K and connection tracker unit R correspond to the units of the same name described in connection with Fig. 4 and are not described again here. In addition to the block diagram of Fig. 6, a load balancer or load balancing unit Q, a reverse bundling controller L, a fail-safe controller M, and a control server O are shown, wherein at least the control server O may be provided outside the router F. Input packets received from the packet addressing unit K are switched by the packet switching unit H to three different logical secondary data channels B1 to B3 via respective encapsulators I1 to I3. Additionally, input packets can be branched or switched by the packet switching unit H to a logical primary data channel A which does not use any encapsulation. All four logical output channels are routed through the load balancer Q to the physical data channels CH1 to CH3. In the download direction or downstream direction or other transmission direction the load balancer forwards data packets received from the public network with the single source address of the logical primary data channel A directly to the packet addressing unit K or via the reverse bundling controller L.

The fail-safe controller M checks the physical data channels CH1 to CH3 using a corresponding control signaling and controls the packet switching unit H, the packet addressing unit K and the address allocation unit N to prevent use of inactive channels. Thereby, it can be ensured that packets are only transmitted via active channels.

The control server O which may be arranged in the public packet-switched network can be configured to control the encapsulators I1 to I3 by using a corresponding control interface at the router F so as to assign the logical secondary channels B1 to B3 to respective auxiliary servers provided in the public packet-switched network, to thereby improve load sharing.

The router F shown in Fig. 6 is thus capable of bundling channels so as to improve transmission rate of a data stream received via the physical local data channel CH0 from a local data source or a local data network (e.g. LAN). The physical data channels CH1 to CH3 may be DSL connections which may route their data packets via the public packet-switched network (e.g. Internet) through different providers to a target server. Due to the fact that the data packets of the logical secondary channels B1 to B3 and the data packets of the logical primary channel A have identical source IP addresses, the target server can send its response to a single destination address (which corresponds to the original source address of the received data packets), so that the response packets are routed through the public switched network to one of the physical data channels CH1 to CH3. The communication may be session-based, so that the router F transmits data packets via the bundled data channel allocated to the communication session and designated by the single source address, and receives an answer via the logical single primary data channel A. Thus, if a large amount of data (e.g. a file) shall be transmitted or received, this transmission can be processed in a single session. The load balancing unit Q is configured to allocate the physical data channels CH1 to CH3 to the data streams of the logical primary and secondary data channels A and B1 to B3 based on the channel load. As an example, different ones of the physical data channels CH1 to CH3 may be used in a rotating manner as primary data channel A (while the remaining channels are used as secondary data channels B) to thereby distribute response packets received from the target server equally on all physical data channels CH1 to CH3.

Optionally, the fail-safe controller M may be configured to control the packet switching unit H to use one of the logical secondary data channels B1 to B3 as a new logical primary data channel, if a failure has been detected on the actual logical primary data channel A.

The reverse bundling controller L may be configured to provide the option that data packets received from a target server can be selectively bundled via a VPN or a proxy device of the public network by setting up two parallel connections to the local data source or local network. In case reverse bundling is achieved via the proxy device, the address of a proxy device is used by the packet addressing unit K as the single source address of the concerned data packets.

As a further option, the router F of Figs. 4 or 6 may comprise a handshake simulation function or unit which adds simulated synchronization and acknowledging signals (e.g. based on the transmission control protocol (TCP)) to thereby accelerate a connection and enable bundling of channels with large or substantially different latencies. This handshake simulation unit may as well be used to initiate retransmission of lost data packets e.g. between the encapsulator(s) I at the router F and the decapsulator(s) J at the at least one auxiliary server D. The handshake simulation might as well be done by the respective encapsulator(s) I, e.g., if a TCP based protocol is used.

The encapsulation by the encapsulator(s) I may be based on standard encapsulation protocols such as Generic Routing Encapsulation (GRE) which is a standard tunneling protocol that can encapsulate a wide variety of network layer protocol packet types inside IP tunnels, creating a virtual point-to-point link to routers at remote points over an IP network. Thereby, firewalls may be passed.

Another option may be to provide a ciphering function or unit for ciphering the encapsulated packets to provide a secured tunnel (e.g. IP Sec).

It is however noted that not all secondary channels of the proposed router F need to provide an encapsulated data stream. In case data streams are routed through networks without spoofing filters, the secondary data channels may be used for directly transmitting non-encapsulated data packets of the second packet stream with the single address as source address to the destinations by routing out prefabricated packets with the single source address or by source address spoofing. Such secondary data channels can be designated as direct secondary data channels.

As a further option, packet size control means could be provided in the router F of Figs. 4 or 6. The packet size control means could be arranged in the packet addressing unit K or the packet switching unit H and could be configured to reject data packets which exceed a predetermined size (particularly the maximum transmission unit (MTU) of the secondary data channel B reduced by encapsulation) and which are to be transmitted via the primary data channel A. Additionally or alternatively, the packet size control means could be configured to divide data packets to be transmitted via the at least one secondary data channel B into fragments, so as to ensure a predetermined maximum packet size (particularly the MTU of A). Thereby, the concept of MTU of a layer of a communication's protocol can be realized to ensure that largest protocol data units are not violated in case of MTU changes. Retransmissions can thereby be avoided.

It is needless to say that other typical router functionalities such as access functions for diagnosis, web surface, control surface, remote access, authentication and the like can be implemented as well.

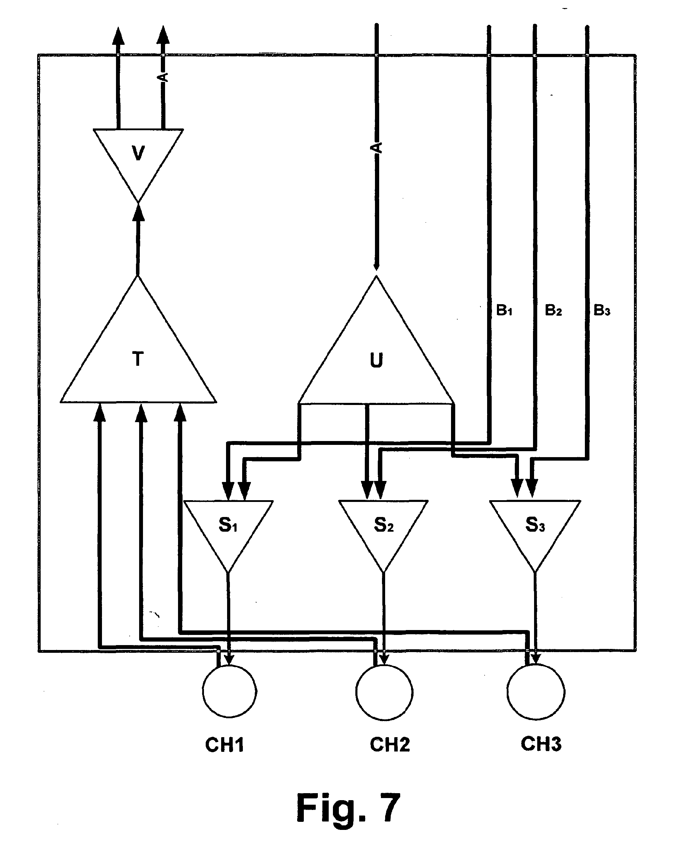

Fig. 7 shows a schematic block diagram of an exemplary implementation of the load balancing unit Q of Fig. 6. Data received from the physical data channels CH1 to CH3 are forwarded to a combiner function T which combines response packets from the destinations to a single data channel from which a VPN demultiplexer V responsible for selection of VPN packets in case reverse bundling is activated. The VPN demultiplexer V switches data packets directly via the primary data channel A to the local terminal or network if no reverse bundling is selected or to the reverse bundling controller L if reverse bundling is activated. In the transmission direction, the primary data channel A is connected to a demultiplexer U which switches data packets of the primary data channel A to one of the physical data channels CH1 to CH3 based on the load balancing mechanism described above. Additionally, selectors S1 to S3 are provided for selecting either an allocated one of the secondary channels B1 to B3 or the supplied primary data channel A based on the load balancing mechanism. Thus, for each physical data channel CH1 to CH3 a corresponding logical channel is allocated. The selectors S1 to S3 can be used to control the load balancing function and/or to use the primary data channel A as a further secondary data channel B.

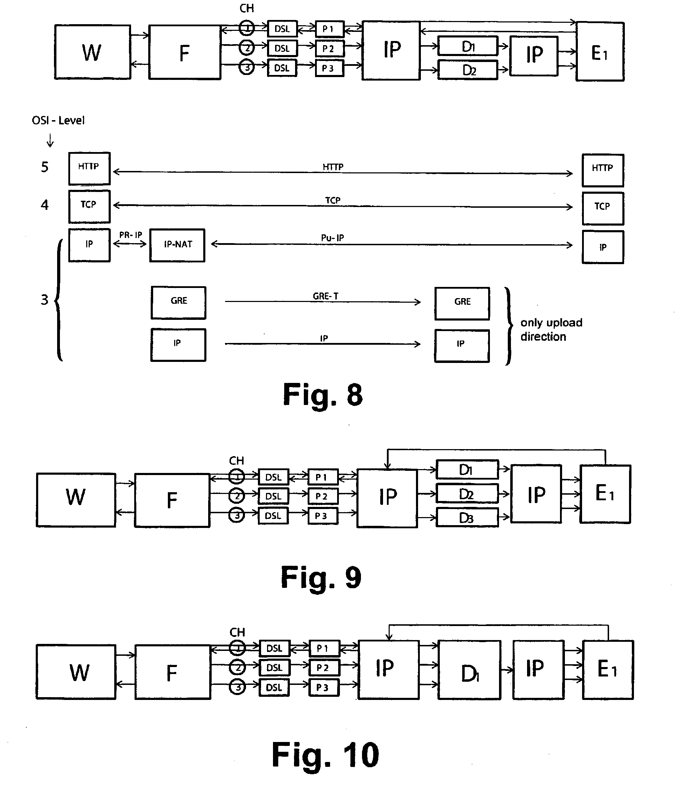

Fig. 8 shows in its upper portion a schematic network configuration according to a sixth embodiment where a local data network W generates a data stream to be bundled in the upload direction and routed to a destination E1, while the responding download data stream is not bundled and only routed through a primary access channel 1. In the lower portion of Fig. 8, an OSI stack is shown, in which processing of different components is assigned to corresponding OSI levels.

As can be gathered from the network structure in the upper portion of Fig. 8, the router F is connected via three DSL connections and three different providers P1 to P3 to an IP network to which two auxiliary servers D1 and D2 are connected through which the secondary data channels 2 and 3 are routed for decapsulation and forwarding to the destination E1. As can be gathered from the OSI stack in the lower portion of Fig. 8, a NAT functionality is provided in the router F on OSI level 3 where the IP address used for routing data packets through the public IP network is translated to an IP address used in the local network W. Additionally, the OSI stack in the lower portion of Fig. 8 shows that a standard tunneling protocol GRE is used between the router F and the auxiliary servers D1 and D2 to establish an encapsulated tunnel connection on top of an IP connection, which means that IP packets are encapsulated based on the GRE protocol. It is noted that the tunneling processing only applies in the upload direction in this embodiment.

Fig. 9 shows a schematic network architecture according to a seventh embodiment, which differs from the sixth embodiment in that also the primary data channel 1 is routed via an auxiliary server D1, similar to the secondary data channels 2 and 3 which are routed via respective auxiliary servers D2 and D3. Thus, in the seventh embodiment, also the primary data channel A could be encapsulated and based on a tunnel connection, wherein decapsulation is performed in the respective auxiliary server D1. This ensures that latencies on all channels can be made substantially equal. Due to the fact that all primary and secondary data channels use the same original source address, the destination E1 cannot recognize the different channels and routes the packets back via the IP network. As the single original source address belongs to the primary data channel 1, all response packets are routed via the DSL connection of the primary channel 1 to the router F and via the NAT functionality to the private domain of the local network W.

Fig. 10 shows a schematic network architecture according to an eighth embodiment which differs from the seventh embodiment in that a single auxiliary server D is provided in the IP network through which all encapsulated packets of the primary and secondary data channels are routed. Again, response packets are routed based on the single source address via the primary data channel 1 and the router F to the local network W. The common auxiliary server D provides the advantage that a common decapsulator can be used for decapsulating all primary and secondary data channels, so that the original sequence of data packets can be maintained regardless of different latencies of the different channels.

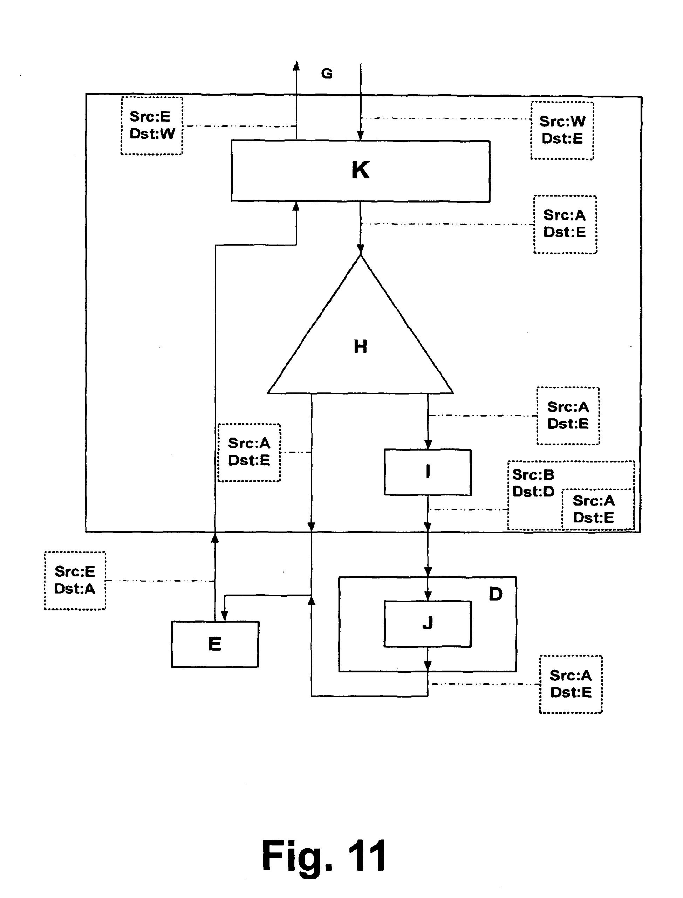

Fig. 11 shows a schematic block diagram of the different network components involved in data transmission and also indicates the source address S and the destination address D of the relevant packet header at different locations on the transmission path. Starting at the top of Fig. 11 a packet at the local channel G of the router F has a source address (Src:) of the local data source or data network W and a destination address (Dst:) of the destination E. After the addressing (and possibly marking for routing, load balancing and/or channel selection) in the packet addressing unit K, in the case, where a NAT functionality is used, the source address of the packet is changed to the single public address of the primary channel A. In the case of bridging, the packet already has got the single public address as source address. In both cases this address is also maintained after the packet switching unit H on the different primary and secondary channels. After the encapsulator I, the original data packet with source address of the primary data channel A and destination address of the destination E is encapsulated in a new packet which header has a source address of the secondary channel B and a destination address of a corresponding auxiliary server D. Accordingly, the packet is routed to the auxiliary server D where it is decapsulated at the decapsulator J so that the obtained decapsulated packet again has the source address of the primary data channel A and the destination address of the destination E. Accordingly, this decapsulated packet is routed to the destination E, similar to the packet which has been directly routed on the primary data channel A. The destination E uses the received source address of the primary data channel A as new destination address and its own address as source address and forwards the response packet to the public network where it is routed to the router F and its packet addressing unit K. At the packet addressing unit K the source address of the received response packet is maintained and the destination address is translated (e.g. by a NAT functionality) into the private address of the local network W.

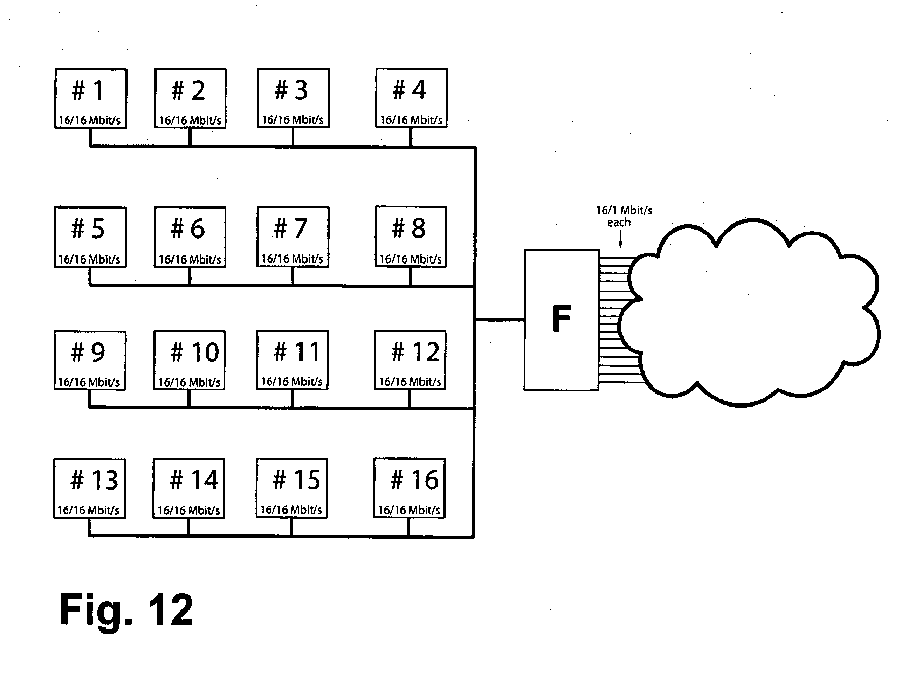

Fig. 12 shows the implementation of an exemplary LAN-based use case according to a ninth embodiment, where 16 PCs in a local LAN use bundling of 16 ADSL2 connections, which each has 16 Mbit/s downstream speed and 1 Mbit/s upstream speed in this example. This embodiment uses load balancing associating each local PC with one of the 16 ADSL2 connections as primary channel. In that way each of the 16 PCs has its own public IP address, with which it is accessible on the public network. Each PC can use 16 Mbit/s in upstream and in downstream direction. The downstream bandwidth is exclusively allocated, the upstream bandwidth is shared between all 16 PCs in the network.

The above embodiments provide the option of an asymmetric bundling in one transmission direction (e.g. upload direction) by using a single public source address, so that all response packets can be routed via the single channel designated by the single public source address in the opposite direction. Thus, from the view point of the target server or destination, the communication is only achieved via the single primary data channel, but at a bundled data rate.

In case load balancing is used, the response packets can be routed via respective different channels which are controlled by a load balancing router, which could be the router F or a separate router provided in the public network. Additionally, the control server O can be used to provide a load distribution on several auxiliary servers to allocate packets based on the load of each auxiliary server.

The local data source or data network may be any network device, personal computer (PC), or LAN which can be connected to the public packet-switched network. This local network or data source sends requests to the target server or destination and receives answers from the target server. The requests are bundled in the upload direction, while the answers may or may not be bundled in the download direction. The connections to the public packet-switched network may be achieved by DSL connections and corresponding DSL modems or other technologies.

Contrary to Multilink-PPP, the proposed bundling solution according to the above embodiments is universally applicable and not dependent on any support by a provider. It can be easily implemented and provides high reliability by combining several different providers. Furthermore, load balancing can be achieved on the IP level (OSI level 3) and can thus accelerate single established connections/transmissions and is not sensitive to continuous connections, such as TCP or general web sessions.

Furthermore, the proposed asymmetric bundling provides an increased upload speed compared to a single communication channel. Due to its applicability on IP level, atomic connections can be accelerated in a transparent manner on higher levels. The proposed bundling is independent of the access technology (e.g. ADSL, VDSL, WLAN, cable) and different access technologies can even be combined. Moreover, it can be implemented in cellular networks for mobile communication. Especially for asynchronous connections a bandwidth saving solution can be provided for the forwarding node.

It is noted that the above-mentioned terms for the downstream - answer stream and response stream - do not exclude the case that the downstream is the first stream of a connection, e.g. when a local device is used as a server. The principle of the proposed bundling approach is totally independent from the direction in which the connection is initiated.

In summary, a system, apparatus and method for bundling a data stream to be transmitted via a public packet-switched network have been proposed, wherein an output data stream is divided into a first packet stream and at least one second packet stream or only into the at least one second packet stream, wherein a single address of a primary data channel connected to the public packet-switched network is provided for every single packet of the first and second packet streams, the single address being a public address of the packet-switched network. The destination address of data packets of the at least one second packet stream can be encapsulated and transmitted with source address of at least one secondary data channel to an auxiliary server which sets the source address of the data packets to the single address or which provides the single address to the destination(s), so that the at least one second packet stream can be directly answered without channel bundling by using the single address as destination address.

The functions and steps described in connection with Figs. 4 to 7 can be implemented on a software basis, wherein a processing unit (e.g. a processor or computing device) is controlled based on software routines of a control program stored in a memory. The control program may also be stored separately on a computer-readable memory. Program code instructions are fetched from the memory and are loaded to a control unit of the processing unit in order to perform the processing steps of the device-specific functionalities. Consequently, the functionalities of the above embodiments of the router and the auxiliary servers may be implemented as a respective computer program product comprising code means for generating each individual step of the processing and/or signaling procedures for the respective entities or functions when run on a computer device or data processor of the respective entity.

Generally, any method step is suitable to be implemented as software or by hardware without changing the idea of the invention in terms of the functionality implemented. Method steps and/or devices, units or means likely to be implemented as hardware components at the above-defined embodiments, or any module(s) thereof (e.g., devices carrying out the functions of the embodiments as described above) are hardware-independent and can be implemented using any known or future-developed hardware technology or any hybrids of these. Furthermore, devices, units or means can be implemented as individual devices, units or means, but this does not exclude that they are implemented in a distributed fashion throughout the system, as long as the functionality of the device, unit or means is preserved.

The terms "computer program", "software", "application", variants and/or combinations thereof, in the present context, mean any expression, in any language, code or notation, of a set of instructions intended to course a system having a processing capable to perform a particular function either directly or after either or both of the following: a) conversion to another language, code or notation; b) reproduction in a different material form. For example, an application can include, but is not limited to, a subroutine, a function, a procedure, an object method, an object implementation, an executable application, an applet, a servlet, a source code, an object code, a shared library/dynamic load library and/or other sequence of instructions designed for execution on a processing system.

Accordingly, the above embodiments may vary within the scope of the attached claims.

## Claims

1. An apparatus for bundling a data stream to be transmitted via a public packet-switched network, said apparatus (F) comprising:
a. a primary data channel (A) connected to said public packet-switched network for receiving an answer stream and for transmitting a first packet stream;
b. a local channel (G) for inputting said data stream and outputting said answer stream;
c. packet addressing means (K) for preparing data packets received as said data stream from said local channel (G) to be sent as an output stream, for preparing data packets received as said answer stream from said primary data channel (A) to be outputted on said local channel (G) to a local device reachable on said local channel (G), and for providing at least one auxiliary server (D) with a single address as a source address, said single address being a public address used by said packet-switched network on said primary data channel;
d. packet switching means (H) for either
- dividing the output data stream of said packet addressing means (K) into a first packet stream, to be transmitted via said primary data channel (A) to at least one destination (E1, E2) which is specified as destination in the data packets, and at least one second packet stream, or
- branching the output data stream of said packet addressing means (K) only into said second packet streams;
e. at least one encapsulator (I) for encapsulating in the data packets of said at least one second packet stream the address of said at least one destination (E1, E2) as a subsequent destination address; and
f. at least one secondary data channel (B) for transmitting the encapsulated data packets with a source address of said at least one secondary channel (B) to one of said at least one auxiliary server (D), to be then forwarded by the one or more auxiliary server to said at least one destination (E1, E2) with a source address corresponding to said single address, so that said at least one second packet stream can be directly answered on said primary data channel (A) without channel bundling by using said single address as destination address in the packets of said answer stream.

2. The apparatus according to claim 1, wherein said apparatus is configured to transmit said single address to said auxiliary server (D) by encapsulation in the data packets.

3. The apparatus according to claim 1 or 2, wherein said packet addressing means (K) comprises a network address translator for translating between at least one local address of a non-public network and said single address, or bridging means for forwarding response packets destined to said single address to at least one local data source and thereby extending said public packet-switched network to said local data source.

4. The apparatus according to claim 3, further comprising address allocating means (N) for allocating said single address to said at least one local data source.

5. The apparatus according to any one of the preceding claims, wherein transmission via some or all of said at least one secondary channel (B) is based on route information provided with the data packets.

6. The apparatus according to any one of claims 1 to 5, wherein said packet switching means (H) is adapted to branch all connection-setup data packets and/or connection-release data packets to said first packet stream and to branch all other data packets to said at least one second packet stream.

7. The apparatus according to any one of the preceding claims, wherein said apparatus is configured to use said primary data channel (A) also as a further secondary data channel.

8. The apparatus according to any one of the preceding claims, further comprising packet size control means for rejecting packets which exceed a predetermined size and which are to be transmitted via said primary data channel (A), and/or for dividing data packets to be transmitted via said at least one secondary data channel (B) into fragments, so as to ensure a predetermined maximum packet size.

9. The apparatus according to any one of the preceding claims, further comprising fail-safe control means for controlling said packet switching means (H) to forward data packets only to active ones of said primary and secondary data channels (A, B), wherein said fail-safe control means are adapted to use a secondary data channel as a new primary data channel, if a failure of said primary data channel has been detected.

10. The apparatus according to any one of the preceding claims, further comprising load balancing means for selectively changing allocation of channels to said primary and secondary data channels (A, B) so as to balance channel load caused by responses from said destinations (E1, E2).

11. The apparatus according to any one of the preceding claims, further comprising reverse bundling means for selectively bundling at least one data stream received from said destinations (E1, E2) via a virtual private network or a proxy device and in the latter case using the address of said proxy device as single source address.

12. The apparatus according to any one of the preceding claims, further comprising at least one direct secondary data channel (B) for directly transmitting non-encapsulated data packets of said second packet stream with said single address as source address to said destinations (E1, E2) by routing out prefabricated packets with said single source address or by source address spoofing so that said at least one second packet stream can be directly answered without channel bundling by using said single address as destination address.

13. The apparatus according to any one of the preceding claims, further comprising handshake simulation means for simulating synchronizing and/or acknowledging signals, wherein said handshake simulation means are adapted to initiate retransmission of lost data packets.

14. A system for bundling a data stream to be transmitted via a public packet-switched network, said system comprising:
a. at least one apparatus according to any one of claims 1 to 12; and
b. at least one auxiliary server (D) for decapsulating said encapsulated data packets and for setting the source address of packets of said at least one secondary channel (B) to said single address.

15. The system according to claim 14, wherein a common decapsulator (J) provided at said at least one auxiliary server (D) is assigned to said at least one encapsulator (I) of said apparatus for all secondary data channels (B), so that data packets are forwarded in a correct sequential order to a respective destination.

16. The system according to claim 14 or 15, wherein at least two auxiliary servers (D) are provided for decapsulating said encapsulated data packets, and further comprising at least one control server (O) for assigning said secondary data channels (B) to said at least two auxiliary servers (D).

17. A method for bundling a data stream to be transmitted via a public packet-switched network, said method comprising:
a. either
- dividing an output data stream destined for arbitrarily chosen destinations (E1, E2) and received via a local channel (G) into a first packet stream and at least one second packet stream or
- branching said output data stream only into said second packet streams;
b. encapsulating an address of the destinations (E1, E2) as a subsequent destination address in the data packets of said at least one second packet stream;
c. providing for every single packet of said first and second packet streams a single address as a source address, said single address being a public address used by said packet-switched network on said primary data channel (A); and
d. transmitting data packets of said at least one second packet streams with source address of at least one secondary channel (B) to an auxiliary server (D), which sets the source address of the data packets to said single address or which provides said single address to said destinations, so that said at least one second packet stream can be directly answered without channel bundling by using said single address as destination address.

18. A computer program product comprising code means for producing the steps of method claim 17 when run on a computing device.

## Patentansprüche

1. Vorrichtung zum Bündeln eines über ein öffentliches paketvermitteltes Netz zu übertragenden Datenstroms, wobei die Vorrichtung (F) umfasst:
a. einen mit dem öffentlichen paketvermittelten Netz verbundenen primären Datenkanal (A) zum Empfangen eines Antwortstroms und zum Senden eines ersten Paketstroms;
b. einen lokalen Kanal (G) zum Eingeben des Datenstroms und Ausgeben des Antwortstroms;
c. eine Paketadressierungseinrichtung (K) zum Vorbereiten von als der Datenstrom von dem lokalen Kanal (G) empfangenen Datenpaketen zur Versendung als ein Ausgangsstrom, zum Vorbereiten von als der Antwortstrom von dem primären Datenkanal (A) empfangenen Datenpaketen zur Ausgabe auf dem lokalen Kanal (G) zu einem auf dem lokalen Kanal (G) erreichbaren lokalen Gerät, und zum Bereitstellen zumindest eines Hilfsservers (D) mit einer einzelnen Adresse als Quellenadresse, wobei die einzelne Adresse eine von dem paketvermittelten Netz auf dem primären Datenkanal verwendete öffentliche Adresse ist;
d. eine Paketvermittlungseinrichtung (H) ausgestaltet entweder
- zum Aufteilen des Ausgangsdatenstroms der Paketadressierungseinrichtung (K) in einen ersten Paketstrom, der über den primären Datenkanal (A) zu zumindest einem in den Datenpaketen als Ziel spezifizierten Ziel (E1, E2) übertragen werden soll, und zumindest einen zweiten Paketstrom, oder
- zum Verzweigen des Ausgangsdatenstroms der Paketadressierungseinrichtung (K) ausschließlich in die zweiten Paketströme;
e. zumindest einen Verkapseler (I) zum Verkapseln der Adresse des zumindest einen Ziels (E1, Es) als eine nachfolgende Zieladresse in den Datenpaketen des zumindest einen zweiten Paketstroms; und
f. zumindest einen sekundären Datenkanal (B) zum Übertragen der verkapselten Datenpakete mit einer Quellenadresse des zumindest einen sekundären Kanals (B) zu einem des zumindest einen Hilfsservers (D), um dann mittels des einen oder mehrerer Hilfsserver zu dem zumindest einen Ziel (E1, E2) mit einer der einzelnen Adresse entsprechenden Quellenadresse weitergeleitet zu werden, sodass der zumindest eine zweite Paketstrom direkt auf dem primären Datenkanal (A) beantwortet werden kann, ohne Kanalbündelung durch Verwendung der einzelnen Adresse als Zieladresse in den Paketen des Antwortstroms.

2. Vorrichtung nach Anspruch 1, wobei die Vorrichtung ausgestaltet ist zum Übertragen der einzelnen Adresse zu dem Hilfsserver (D) durch Verkapseln in den Datenpaketen.

3. Vorrichtung nach Anspruch 1 oder 2, wobei die Paketadressierungseinrichtung einen Netzadressenübersetzer umfasst zum Übersetzen zwischen zumindest einer lokalen Adresse eines nichtöffentlichen Netzes und der einzelnen Adresse, oder eine Überbrückungseinrichtung zum Weiterleiten von zu der einzelnen Adresse gerichteten Antwortpaketen zu zumindest einer lokalen Datenquelle, um dadurch das öffentliche paketvermittelte Netz zu der lokalen Datenquelle zu erweitern.

4. Vorrichtung nach Anspruch 3, des Weiteren umfassend eine Adressenzuweisungseinrichtung (N) zum Zuweisen der einzelnen Adresse zu der zumindest einen lokalen Datenquelle.

5. Vorrichtung nach einem der vorhergehenden Ansprüche, wobei die Übertragung über einige oder alle des zumindest einen sekundären Kanals (B) auf einer mit den Datenpaketen bereitgestellten Routeninformation basiert.

6. Vorrichtung nach einem der Ansprüche 1 bis 5, wobei die Paketvermittlungseinrichtung (H) ausgestaltet ist zum Verzweigen aller Verbindungsaufbaudatenpakete und/oder Verbindungsunterbrechungsdatenpakete zu dem ersten Paketstrom und zum Verzweigen aller anderen Datenpakete zu dem zumindest einen zweiten Paketstrom.

7. Vorrichtung nach einem der vorhergehenden Ansprüche, wobei die Vorrichtung ausgestaltet ist zum Verwenden des primären Datenkanals (A) auch als weiterer sekundärer Datenkanal.

8. Vorrichtung nach einem der vorhergehenden Ansprüche, des Weiteren umfassend eine Paketgrößensteuereinrichtung zum Zurückweisen von Paketen, die eine vorbestimmte Größe überschreiten und die über den primären Datenkanal (A) übertragen werden sollen, und/oder zum Aufteilen von über den zumindest einen zweiten Datenkanal (B) zu übertragenden Datenpaketen in Fragmente, um dadurch eine vorbestimmte maximale Paketgröße sicherzustellen.

9. Vorrichtung nach einem der vorhergehenden Ansprüche, des Weiteren umfassend eine Ausfallsicherheitssteuereinrichtung zum Steuern der Paketvermittlungseinrichtung (H) zum Weiterleiten von Datenpaketen ausschließlich zu aktiven Kanälen der primären und sekundären Datenkanäle (A, B), wobei die Ausfallsicherheitssteuereinrichtung ausgestaltet ist zum Verwenden eines sekundären Datenkanals als neuer primärer Datenkanal, falls eine Störung des primären Datenkanals erfasst wurde.

10. Vorrichtung nach einem der vorhergehenden Ansprüche, des Weiteren umfassend eine Lastausgleichseinrichtung zum selektiven Ändern einer Zuweisung von Kanälen auf die primären und sekundären Datenkanäle (A, B), um dadurch eine durch Antworten von den Zielen (E1, E2) verursachte Kanalbelastung auszugleichen.

11. Vorrichtung nach einem der vorhergehenden Ansprüche, des Weiteren umfassend eine Umkehrbündeleinrichtung zum selektiven Bündeln von zumindest einem von den Zielen (E1, E2) über ein virtuelles privates Netz oder ein Proxygerät empfangenen Datenstrom und im letzteren Falle zum Verwenden der Adresse des Proxygeräts als einzige Quellenadresse.

12. Vorrichtung nach einem der vorhergehenden Ansprüche, des Weiteren umfassend zumindest einen direkten sekundären Datenkanal (B) zum direkten Übertragen von nichtverkapselten Datenpaketen des zweiten Paketstroms mit der einzelnen Adresse als Quellenadresse zu den Zielen (E1, E2) durch Ausleiten vorgefertigter Pakete mit der einzelnen Quellenadresse oder durch Spoofing einer Quellenadresse, sodass der zumindest eine zweite Paketstrom durch Verwenden der einzelnen Adresse als Zieladresse ohne Kanalbündelung direkt beantwortet werden kann.

13. Vorrichtung nach einem der vorhergehenden Ansprüche, des Weiteren umfassend eine Handshakes-Simulationseinrichtung zum Simulieren von Synchronisier- und/oder Bestätigungssignalen, wobei die Handshake-Simulationseinrichtung ausgestaltet ist zum Initiieren von wiederholten Übertragungen verlorengegangener Datenpakete.

14. System zum Bündeln eines über ein öffentliches paketvermitteltes Netz zu übertragenden Datenstroms, wobei das System umfasst:
a. zumindest eine Vorrichtung nach einem der Ansprüche 1 bis 12; und
b. zumindest einen Hilfsserver (D) zum Entkapseln der verkapselten Datenpakete und zum Festlegen der Quellenadresse von Paketen des zumindest einen sekundären Kanals (B) auf die einzelne Adresse.

15. System nach Anspruch 14, wobei ein an dem zumindest einen Hilfsserver (D) vorgesehener gemeinsamer Entkapseler (J) dem zumindest einen Verkapsler (I) der Vorrichtung für alle sekundäre Datenkanäle (B) zugeordnet ist, sodass Datenpakete in korrekter Reihenfolge zu einem entsprechenden Ziel weitergeleitet werden.

16. System nach Anspruch 14 oder 15, wobei zumindest zwei Hilfsserver (D) vorgesehen sind zum Entkapseln der verkapselten Datenpakete, und des Weiteren umfassend zumindest einen Steuerserver (O) zum Zuweisen der sekundären Datenkanäle (B) zu den zumindest zwei Hilfsservern (D).

17. Verfahren zum Bündeln eines über ein öffentliches paketvermitteltes Netz zu übertragenden Datenstroms, wobei das Verfahren umfasst:
a. entweder
- Aufteilen eines zu beliebig gewählten Zielen (E1, E2) gerichteten und über einen lokalen Kanal (G) empfangenen Ausgangsdatenstroms in einen ersten Paketstrom und zumindest einen zweiten Paketstrom, oder
- Verzweigen des Ausgangsdatenstroms ausschließlich in die zweiten Paketströme;
b. Verkapseln einer Adresse der Ziele (E1, E2) als nachfolgende Zieladresse in den Datenpaketen des zumindest einen zweiten Paketstroms;
c. Bereitstellen einer einzelnen Adresse als Quellenadresse für jedes einzelne Paket des ersten und zweiten Paketstroms, wobei die einzelne Adresse eine von dem paketvermittelten Netz auf dem primären Datenkanal (A) verwendete öffentliche Adresse ist; und
d. Übertragen von Datenpaketen des zumindest einen zweiten Paketstroms mit einer Quellenadresse zumindest eines sekundären Kanals (B) zu einem Hilfsserver (D), der die Quellenadresse des Datenpakets auf die einzelne Adresse festlegt oder der die einzelne Adresse den Zielen bereitstellt, sodass der zumindest eine zweite Paketstrom durch Verwenden der einzelnen Adresse als Zieladresse ohne Kanalbündelung direkt beantwortet werden kann.

18. Computerprogrammprodukt mit Codemitteln zum Erzeugen der Schritte des Verfahrensanspruchs 17 bei deren Ausführung auf einer Computervorrichtung.

## Revendications

1. Dispositif de regroupage d'un flux de données à transmettre par l'intermédiaire d'un réseau public commuté par paquets, le dispositif (F) comprenant :
a. un canal (A) primaire de données relié au réseau public commuté par paquets, pour recevoir un flux de réponse et pour transmettre un premier flux de paquets ;
b. un canal (G) local, pour faire entrer le flux de données et pour faire sortir le flux de réponse ;
c. des moyens (K) d'adressage de paquets, pour préparer des paquets de données reçus comme flux de données provenant du canal (G) local à envoyer comme flux de sortie, pour préparer des paquets de données reçus comme flux de réponse du canal (A) primaire de données à sortir sur le canal (G) local vers un dispositif local pouvant être atteint sur le canal (G) local et pour alimenter au moins un serveur (D) auxiliaire ayant une adresse unique comme adresse source, l'adresse unique étant une adresse publique utilisée par le réseau commuté par paquets sur le canal primaire de données ;
d. des moyens (H) de commutation de paquets, pour ou bien
- subdiviser le flux de sortie de données des moyens (K) d'adressage de paquets en un premier flux de paquets à transmettre par l'intermédiaire du canal (A) primaire de données à au moins une destination (E1, E2), qui est précisée comme destination dans les paquets de données, et en au moins un deuxième flux de paquets, ou bien
- dériver le flux de sortie de données des moyens (K) d'adressage de paquets seulement dans les deuxièmes flux de paquets;
e. au moins un encapsulateur (I), pour encapsuler, dans les paquets de données du au moins un deuxième flux de paquets, l'adresse de la au moins une destination (E1, E2) comme adresse de destination subséquente ; et
f. au moins un canal (B) secondaire de données, pour transmettre les paquets de données encapsulés avec une adresse source du au moins un canal (B) secondaire à l'un du au moins un serveur (D) auxiliaire, à acheminer ensuite par le un ou plusieurs serveurs auxiliaires à la au moins une destination (E1, E2) avec une adresse source correspondant à l'adresse unique, de sorte que le au moins un second flux de paquets peut être annoncé directement sur le canal (A) primaire de données sans regroupage de canal en utilisant l'adresse unique comme adresse de destination dans les paquets du flux de réponse.

2. Dispositif suivant la revendication 1, dans lequel le dispositif est configuré pour transmettre l'adresse unique au serveur (D) auxiliaire par encapsulation dans les paquets de données.

3. Dispositif suivant la revendication 1 ou 2, dans lequel les moyens (K) d'adressage de paquets comprennent un traducteur d'adresses de réseau, pour traduire entre au moins une adresse locale d'un réseau non-public et l'adresse unique, ou des moyens de dérivation, pour acheminer des paquets de réponses destinés à l'adresse unique à au moins une source locale de données et pour étendre ainsi le réseau public commuté par paquets à la source locale de données.

4. Dispositif suivant la revendication 3, comprenant, en outre, des moyens (N) d'allocation d'adresse, pour allouer l'adresse unique à la au moins une source locale de données.

5. Dispositif suivant l'une quelconque des revendications précédentes, dans lequel une transmission, par l'intermédiaire de tout ou partie du au moins un canal (B) secondaire, repose sur une information d'acheminement fournie par les paquets de données.

6. Dispositif suivant l'une quelconque des revendications 1 à 5, dans lequel les moyens (H) de commutation de paquets sont conçus pour dériver tous les paquets de données d'établissement de connexion et/ou tous les paquets de données de libération de connexion vers le premier flux de paquets et pour dériver tous les autres paquets de données vers le au moins un second flux de paquets.

7. Dispositif suivant l'une quelconque des revendications précédentes, dans lequel le dispositif est configuré pour utiliser le canal (A) primaire de données également comme canal secondaire de données supplémentaire.

8. Dispositif suivant l'une quelconque des revendications précédentes, comprenant, en outre, des moyens de commande de la dimension des paquets, pour rejeter des paquets qui dépassent une dimension déterminée à l'avance et qui doivent être transmis par l'intermédiaire du canal (A) primaire de données et/ou pour subdiviser des paquets de données à transmettre par l'intermédiaire du au moins un canal (B) secondaire de données en des fragments, de manière à assurer une dimension de paquets maximum déterminée à l'avance.

9. Dispositif suivant l'une quelconque des revendications précédentes, comprenant, en outre, des moyens de commande à sécurité intégrée, pour commander les moyens (H) de commutation de paquets, afin d'envoyer des paquets de données seulement aux canaux actifs des canaux (A, B) primaire et secondaire de données, les moyens de commande à sécurité intégrée étant conçus pour utiliser un canal secondaire de données comme nouveau canal primaire de données, si un dérangement du canal primaire de données a été détecté.

10. Dispositif suivant l'une quelconque des revendications précédentes, comprenant, en outre, des moyens d'équilibrage de charge, pour changer sélectivement l'allocation de canaux aux canaux (A, B) primaire et secondaire de données, de manière à équilibrer la charge des canaux provoquée par des réponses en provenance des destinations (E1, E2).

11. Dispositif suivant l'une quelconque des revendications précédentes, comprenant, en outre, des moyens de regroupage inverse, pour regrouper sélectivement au moins un flux de données reçu des destinations (E1, E2) par l'intermédiaire d'un réseau virtuel privé ou d'un dispositif serveur et, dans ce dernier cas, pour utiliser l'adresse du dispositif serveur comme adresse source unique.

12. Dispositif suivant l'une quelconque des revendications précédentes, comprenant, en outre, au moins un canal (B) direct secondaire de données, pour transmettre directement des paquets de données non encapsulés du deuxième flux de paquets avec l'adresse unique comme adresse source aux destinations (E1, E2) en acheminant des paquets préfabriqués avec l'adresse source unique ou en émulant une adresse source, de manière à pouvoir annoncer le au moins un deuxième flux de paquets directement, sans regroupage de canal, en utilisant l'adresse unique comme adresse de destination.

13. Dispositif suivant l'une quelconque des revendications précédentes, comprenant, en outre, des moyens de simulation d'établissement de liaison, pour simuler des signaux de synchronisation et/ou d'accusés de réception, les moyens de simulation d'établissement de liaison étant conçus pour faire débuter une retransmission de paquets de données perdus.

14. Système de regroupage d'un flux de données à transmettre par l'intermédiaire d'un réseau public commuté par paquets, le système comprenant :
a. au moins un dispositif suivant l'une quelconque des revendications 1 à 12 ; et
b. au moins un serveur (D) auxiliaire, pour décapsuler les paquets de données encapsulés et pour mettre l'adresse source de paquets du au moins un canal (B) secondaire à l'adresse unique.

15. Système suivant la revendication 14, dans lequel un décapsuleur (J) commun prévu au au moins un serveur (D) auxiliaire est affecté au au moins un encapsulateur (I) du dispositif pour tous les canaux (B) secondaires de données, de manière à acheminer les paquets de données dans un ordre séquentiel correct à une destination respective.

16. Système suivant la revendication 14 ou 15, dans lequel au moins deux serveurs (D) auxiliaires sont prévus pour décapsuler les paquets de données encapsulés et comprenant, en outre, au moins un serveur (O) de commande, pour affecter les canaux (B) secondaires de données aux au moins deux serveurs (D) auxiliaires.

17. Procédé pour regrouper un flux de données à transmettre par l'intermédiaire d'un réseau public commuté par paquets, le procédé comprenant :
a. ou bien,
subdiviser un flux de sortie de données destinées à des destinations (E1, E2) choisies arbitrairement et reçues par l'intermédiaire d'un canal (G) local en un premier flux de paquets et en au moins un deuxième flux de données,
ou bien
dériver le flux de sortie de données, seulement dans les deuxièmes flux de paquets ;
b. encapsuler une adresse des destinations (E1, E2) comme adresses de destination subséquentes dans les paquets de données du au moins un deuxième flux de paquets ;
c. fournir, pour chaque paquet unique du premier et du deuxième flux de paquets, une adresse unique comme adresse source, l'adresse unique étant une adresse publique utilisée par le réseau commuté par paquets sur le canal (A) primaire de données ; et
d. transmettre des paquets de données du au moins un deuxième flux de paquets avec une adresse source d'au moins un canal (B) secondaire à un serveur (D) auxiliaire, qui fixe l'adresse source des paquets de données à l'adresse unique ou qui fournit l'adresse unique aux destinations, de manière à ce qu'au moins un deuxième flux de paquets puisse être annoncé directement sans regroupage de canal en utilisant l'adresse unique comme adresse de destination.

18. Produit de programme d'ordinateur comprenant des moyens de code pour produire les stades de la revendication 17 de procédé, lorsqu'il passe sur un dispositif informatique.
